(19) Europäisches Patentamt
European Patent Office
Office européen des brevets

(11) EP 2 199 007 A1

(12) EUROPEAN PATENT APPLICATION
published in accordance with Art. 153(4) EPC

(43) Date of publication:
23.06.2010 Bulletin 2010/25

(51) Int Cl.:
B23K 26/00 (2006.01)      B23K 26/38 (2006.01)
B28D 5/00 (2006.01)

(21) Application number: 08792576.4

(22) Date of filing: 20.08.2008

(86) International application number:
PCT/JP2008/064855

(87) International publication number:
WO 2009/050938 (23.04.2009 Gazette 2009/17)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 16.10.2007 JP 2007268589

(71) Applicant: Mitsuboshi Diamond Industrial Co.,
Ltd.
Suita-city, Osaka 564-0044 (JP)

(72) Inventors:
• MORITA, Hideki
Suita-city
Osaka 564-0044 (JP)
• SHIMIZU, Seiji
Suita-city
Osaka 564-0044 (JP)
• FUKUHARA, Kenji
Suita-city
Osaka 564-0044 (JP)

(74) Representative: TBK-Patent
Bavariaring 4-6
80336 München (DE)

(54) METHOD OF MACHINING U-SHAPED GROOVE OF SUBSTRATE OF FRAGILE MATERIAL, REMOVAL METHOD, BORING METHOD AND CHAMFERING METHOD USING THE SAME METHOD

(57) A method for creating a trench in U shape according to which trenches in lines which are continuous or broken or curved in a plane can be easily created on the surface of a substrate, as well as a chamfering method using this, are provided.

A trench in U shape is created by peeling part of a brittle material substrate from the surface of the substrate by rapidly heating the substrate with conditions for irradiation with a laser for creating a trench in U shape which include the laser power as found in advance, the area to be irradiated with a laser, and the scanning speed, in accordance with the substrate material, which is the object to be processed, and the width, depth and form of the trench in U shape to be created. A chamfered surface is made of a trench surface which is part of a trench in U shape created between an end surface and a surface of the substrate, which are separated along a line along which the substrate is to be divided, between a start end and a finish end of said line along which the substrate is to be divided at the bottom of the created trench in U shape in accordance with a method for scribing a substrate by expanding a crack with a laser, a scribing method using a cutter wheel or the like.

Fig. 6

Printed by Jouve, 75001 PARIS (FR)

**Description**

Technical Field

The present invention relates to a method for creating a trench in U shape by rapidly heating part of the surface of a brittle material substrate so that that part peels from the surface, as well as a method for carrying out a removing process or a hollowing process on an object to be processed using this method.

Brittle material substrates, for example glass substrates, are used for processing tables in precision machines, because they have a low coefficient of linear expansion, for example. Conventional processing tables of this type are formed of an upper frame and a lower frame, and a lubricant reservoir for enhancing the lubricity and a cooling path are created in the contact surface of the upper and lower frames. In order to create the lubricant reservoir and the cooling path, a trench must be created in the glass substrate. In addition, mechanical methods and chemical methods are generally known as methods for creating a trench. Mechanical methods are methods for mechanically creating a trench in a glass substrate through a cutting process or a discharge process, and after that carrying out polishing. Though these methods have an advantage, such that trenches can be created with high precision, there is a problem with the work for mechanically creating a trench, such that the efficiency is low, the mass producibility is poor, and the cost of manufacture is high. Meanwhile, chemical methods are methods for creating a trench through etching, and include methods using isotropic etching and methods using anisotropic etching. These methods using etching are appropriate for mass production and can lower the cost. However, there are problems, such that trenches cannot be created with precision, in comparison with using mechanical methods.

As for the method for carrying out a chamfering process on a brittle material substrate, there are methods for carrying out a chamfering process on an edge line through a cutting process, a grinding process, a polishing process or a discharging process, and as concerns chamfering processes using a laser, a method for carrying out a chamfering process through laser ablation by fusing or sublimating a substrate material at a high temperature by irradiating it with a laser, and thus removing it, is known. An ablation mark remains on the surface on which a chamfering process is carried out using laser ablation, and thus microscopic cracks easily appear, making it difficult to gain a preferable surface for carrying out a chamfering process. In addition, there is a problem with laser ablation, such that the pieces of the substrate removed through laser irradiation scatter and contaminate the substrate, and therefore, contaminants must be removed afterward.

In addition to the above described method for a chamfering process through ablation, a heating and melting method for heating and melting the substrate along an edge line by irradiating it with a laser beam has been proposed as another method for a chamfering process using a laser. A chamfering method for making the edge line round using the surface tension of the material by heating and softening the portion in the vicinity of an edge line using a laser in such a state that the entirety of the glass member remains at a temperature higher than room temperature (remaining heat), for example, is disclosed (Patent Document 1).

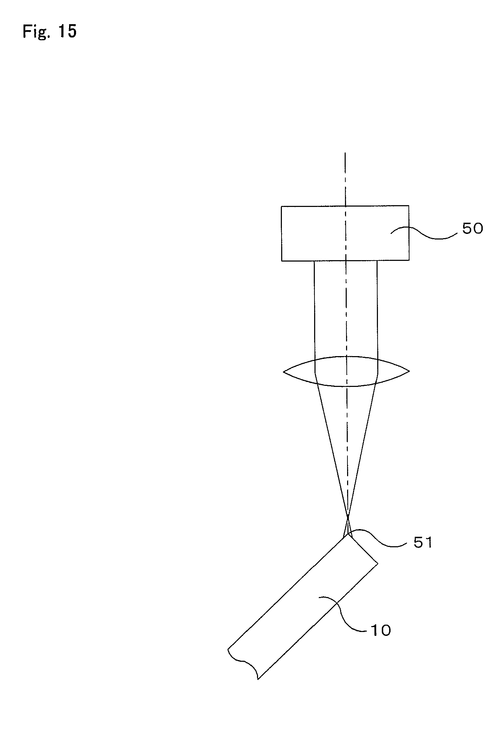

Fig 15 is a cross sectional diagram showing the state of a laser from a $CO_2$ laser source when used for a chamfering process in accordance with a heating and melting method. The entirety of a glass substrate 10 is gradually heated (preheated) in advance using a heater, not shown, and kept at a predetermined temperature which is lower than the temperature for softening, and next the glass substrate 10, which is kept at a predetermined temperature, is scanned with a laser beam from the $CO_2$ laser source 50 along an edge line 51. At this time, the laser output and the scanning speed are adjusted so that the portion irradiated with the laser beam becomes of a high temperature and softens, and thus, the edge portion irradiated with the laser becomes rounded, due to the surface tension of the material itself.

In this case, preheating and cooling after the process take time. In addition, it is necessary to preheat the entire substrate, and therefore, in the case where a functional film, such as a device or sensor, which cannot be heated, has already been formed on the substrate, this method for a chamfering process cannot be carried out. In addition, in the case where preheating is insufficient, there is cracking, due to thermal stress, and an appropriate chamfering process cannot be carried out. Furthermore, in the chamfering process using heating and melting, the melted portion deforms, and parts of it (parts of the rounded portion) swell more than other parts, and the flatness on the end surface of the substrate may be affected.

Furthermore, in addition to the heating and melting method using laser irradiation, a chamfering method using a laser according to which a portion in the vicinity of an edge is irradiated with a laser beam and heated, so that the glass substrate 10 cracks, and the substrate is scanned with the laser beam in the direction of the edge line, so that the crack expands along the edge line, and thus, the portion in the vicinity of the edge is separated from the glass substrate, is disclosed as another chamfering method (Patent Document 2).

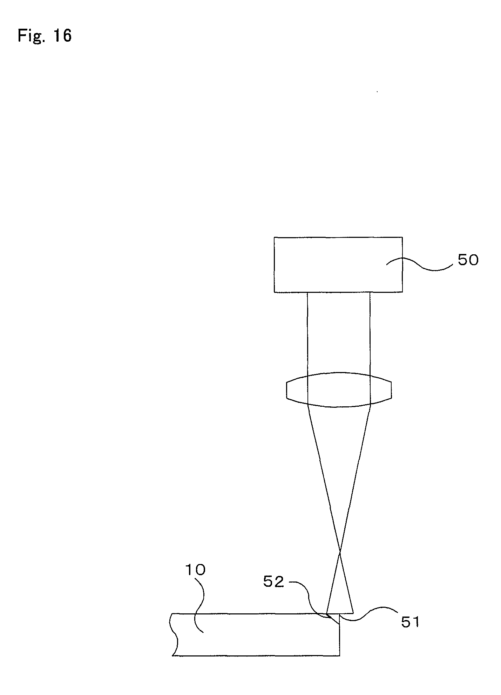

Fig 16 is a cross sectional diagram showing the state of a laser coming from a $CO_2$ laser source with which a chamfering process is carried out using an expanding crack through laser heating. A crack 52 appears in the vicinity of the edge line 51 of the glass substrate 10, due to thermal stress and local, thermal expansion caused by the laser beam coming from the $CO_2$ laser source 50. Then, the substrate is scanned with a laser beam along the edge line 51, so that cracks 52 which appear one after another extend along the edge line 51, and the portion in the vicinity of the edge, including the edge line 51 (corner portion) is separated.

Patent Document 2 states that the chamfering process using an expanding crack through laser heating can be carried out without the precision of the glass substrate being affected, with high mass producibility, and without requiring a cleaning process.

Patent Document 1: Japanese Unexamined Patent Publication H2 (1990)-241684
Patent Document 2: Japanese Unexamined Patent Publication H9 (1997)-225665

Disclosure of the Invention

Problem to Be Solved by the Invention

As described above, in accordance with the method for chamfering a glass substrate through irradiation with a laser, substrates are scanned with a laser beam along the edge line created on a divided surface. At this time, there is a problem with contamination on substrates which are chamfered through laser ablation, and there is a problem with the flatness on the end surface of the substrate being lost, in the case of chamfering using a heating and melting method. Though there are no such problems with chamfering processes for extending a crack using laser heating, there are other problems with parts remaining unprocessed, and the amount of chamfering is not uniform.

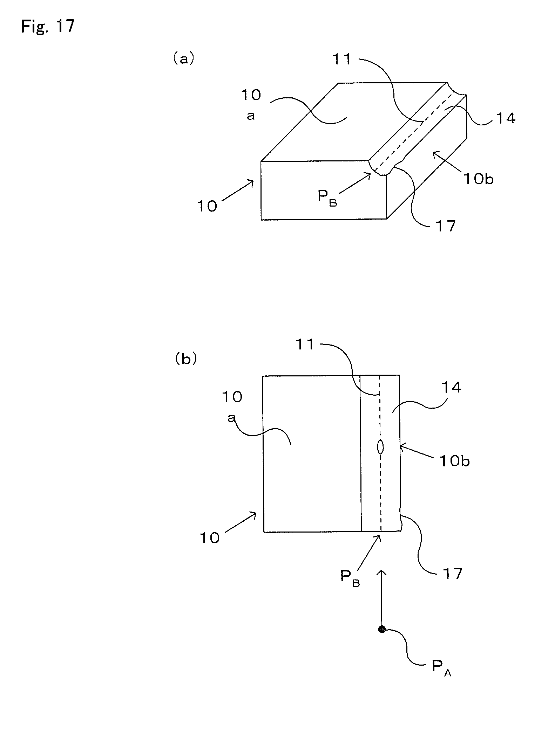

Fig 17(a) is a perspective diagram showing the state of a glass substrate on which a chamfering process for expanding a crack by applying heat with a laser is carried out, and Fig 17(b) is a plan diagram of the same. The laser beam at point $P_A$ at a distance from the glass substrate 10 moves toward the edge line 11, and furthermore, the glass substrate is scanned with the laser beam along the edge line 11, from one end $P_B$, and thus, the glass substrate is heated to a temperature no higher than the softening point along the edge line 11. As a result, a crack expands in the vicinity of the edge line 11 irradiated with the laser beam, due to the thermal stress, so that a chamfered surface 14 in arc form is created. However, an irregular, unprocessed region 17 remains in the vicinity of the end $P_B$ on the edge line along which the glass substrate 10 is initially irradiated with a laser beam. It is difficult to completely prevent such an irregular, unprocessed region 17 from remaining by adjusting the angle at which the substrate 10 is irradiated with the laser beam, or other conditions. In addition, it is difficult to create a stable chamfered surface 14, due to poor symmetry in the distribution of the temperature in the vicinity of the edge line, and thus, there are defects, such as microscopic cracks. As described above, there are various problems in the case where a trench is created in a glass substrate or a chamfering process is carried out, and thus, an improved method for a more appropriate process is required.

Therefore, an object of the present invention is to provide a method for creating a trench according to which continuous or broken trenches in straight lines or curved lines can be easily created on the surface of a substrate using a laser as a means for rapidly heating a brittle material substrate.

Another object of the invention is to provide a new chamfering method for an edge line chamfering process according to which no region remains unprocessed when a chamfering process is carried out on a brittle material substrate along an edge line on an end surface.

Still another object is to provide a new chamfering method according to which microscopic cracks are not easily created on the surface on which a chamfering process is carried out.

Yet another object is to provide a removing method for creating a trench in U shape on the surface of a brittle material substrate without microscopic cracks found during the process of examining new chamfering methods.

Still yet another object of the present invention is to provide a removing method for processing the surface of the material so that it becomes approximately a plane by repeatedly creating trenches. Another object is to provide a method for removing part or the entirety of the surface around the outer periphery of the object to be processed, which is a rotational body, while rotating the object to be processed around a rotational axis.

Still another object of the invention is to provide a hollowing method for separating a material along a trench in U shape so that the material is hollowed after creating a trench in U shape for a rectangular or curved closed circuit in the plate which is the object to be processed using a method for creating a trench in U shape in a brittle material substrate.

Means for Solving Problem

The present inventors found that the surface of a brittle material substrate locally peels when part of the surface is rapidly heated using a laser beam which is appropriate for local heating under heating conditions which make peeling possible, and thus thought of a removing method for rapidly and locally heating a brittle material substrate using a laser and peeling the irradiated portion continuously, discontinuously or intermittently.

That is to say, ablation processes and laser scribing methods for processing by expanding a crack have been known so far as removing processes using irradiation with a laser. The inventors found that the substrate can be processed when the heated portion peels from the material due to the thermal expansion in the heated portion, which is different from in ablation processes and scribing processes for expanding a crack, by selecting the conditions for heating in the case where the substrate is locally and rapidly heated through irradiation with a laser.

Effects of the Invention

When peeling through irradiation with a laser is used, part of the object to be processed is peeled and removed in a non-contact state, and therefore, there are no tools to wear out, as opposed to in removing processes using tools (cutting, shaving, polishing and the like), and in addition, the speed of processing is a great deal faster. Furthermore, the object to be processed melts or vaporizes very little in comparison to in laser ablation processes, and therefore, the energy for processing can be saved, and problems with the melt material adhering to the object to be processed can also be solved.

(Other Means for Solving Problem and Effects)

In addition, as a result of examination of the conditions for the chamfering process, where unprocessed regions can be prevented from remaining and microscopic cracks can be prevented at the time of the chamfering process, it was found that poor symmetry in the distribution of the temperature in the vicinity of the edge line was a factor in making unprocessed regions easy to remain and microscopic cracks easy to cause in the case where a chamfering process is carried out by heating the substrate along an edge line using a laser. Furthermore, various means are combined, sticking to chamfering for carrying out a removal process on an edge line on a cut surface in order to process the substrate, but a satisfactory combination cannot be gained. That is to say, it was found that a chamfered state is consequently achieved when a trench in U shape is created on the surface of a brittle material substrate before the brittle material substrate is cut, and after that, the substrate is cut along this trench in U shape. Concretely, it was found that part of a brittle material substrate having a cross section in U shape peels from the surface when the surface of a brittle material substrate is rapidly, linearly and successively heated under conditions for heating that make peeling possible, and therefore, a new chamfering method is thought of by using this.

In accordance with this new chamfering method, conditions for irradiation with a laser for creating a trench in U shape that were found through experiment in advance, including the laser power, the area to be irradiated by a laser, and the scanning speed, are selected in accordance with the substrate material of the object to be processed, and the width, depth and form of the trench in U shape to be created, and the object is scanned with a laser beam under these conditions for irradiation with a laser in the case where a laser is used as a means for rapidly heating a brittle material substrate.

When the surface of a brittle material substrate is irradiated with a laser, the irradiated portion absorbs the laser beam and is rapidly heated, and the temperature rises. At this time, there is a great gradient in the temperature, in the border between the irradiated portion and the non-irradiated portion. Thus, the portion where the temperature is high thermally expands, while the material in the non-irradiated portion does not deform following the thermal expansion, because the material does not easily change plastically or elastically, and therefore, there is a great shearing stress in the vicinity of the border between the irradiated portion (heated portion) and the non-irradiated portion (unheated portion) (the shearing stress is particularly large in the direction in which the substrate is scanned with a laser), and the heated portion peels and separates from the material, due to this shearing stress. That is to say, the heated portion is considered to peel from the material when the degree of thermal expansion in the heated portion exceeds the allowable degree of elastic deformation or plastic deformation in the unheated portion. A removal process is carried out on a material by introducing such peeling continuously or intermittently.

In other words, it is considered that in accordance with this processing method, the portion irradiated with a laser intermittently slides against the front and side portions, starting from latent defects of the material, due to the enormous shearing force applied in the portion having a great difference in temperature (as a result, there is a step on the peeled surface), and finally, the portion of the brittle material substrate peels, and thus a trench in U shape is created.

At this time, the peeled portion (waste) is removed from the brittle material substrate, and therefore, may be heated to the softening point of the brittle material substrate or higher, or part may be evaporated. Concretely, the temperature may be higher than the softening point or distortion point in the portion to be peeled and removed, or the portion may collapse. Meanwhile, it is necessary to adjust the laser power for heating so that the gradient of the temperature is great in the vicinity of the interface between the used side and the surface of the trench in U shape, and the temperature is much lower than the softening point and the distortion point.

At this time, the density of microscopic cracks on the sliding surface may be lower than in the case where a trench is created in accordance with another method, such as ablation, and therefore, a chamfering process becomes possible for tough materials, when they are divided from the bottom of the trench.

In addition, it becomes difficult for the material to peel, due to the small gradient in the temperature when the material has a very high thermal conductance, like with single crystal silicon, and therefore, it is necessary to cool the unheated portion so that the gradient in the temperature is high. In addition, it is necessary to control the cooling performance (type of coolant, rate of flow and the like) in order to adjust the shape of the trench. Concretely, in the case where the cooling performance is good (when cooled with water or the like, in the case of a material (glass substrate) which peels without cooling (cooling through convection of air)), the width of the trench is small, and the angle for chamfering is wide in the case where the conditions for heating with a laser are such that the depth is the same. Accordingly, the angle for chamfering (curvature) becomes smaller when the cooling performance is poorer. The shape of the trench is adjusted using these phenomena, and thus, chamfering of a brittle material substrate can be achieved.

Here, "brittle material substrate" includes crystal substrates, single crystal silicon substrates, sapphire substrates, semiconductor wafers and sintered ceramic substrates, in addition to glass substrates.

In addition, "trench in U shape" is not limited to trenches which are literally in "U shape," and includes trenches having an inner wall surface (valley surface) made of a smooth, curved surface without any inflection. That is to say, the inner wall surface may be in arc form, elliptical form or parabolic form. Here, it is necessary for at least the "width," "depth" or "bottom" of the "trench" to be specified. Concretely, one crack running in line is not a trench. Two parallel cracks on the surface of a substrate constitute the width of a trench, and furthermore, the connection of the two cracks inside the substrate constitutes the depth of the trench. In addition, the form of the trench in U shape in a plane includes any form, such as a line, a curve or a circle.

In addition, the rapid heating means includes a halogen heater and a xenon lamp, in addition to a laser, and, of course, any means which can locally heat an object to be processed, in addition to a laser and a xenon lamp.

In addition, "conditions for irradiation with a laser for creating a trench in U shape, including the laser power as found in advance, the area to be irradiated with a laser, and the scanning speed" are conditions for irradiation with a laser that have been found through experiment and trial and error, where a desired width, depth and bottom are set for a trench in U shape, and substrates made of the same material and having the same form are irradiated with a laser in advance, so that the conditions for gaining a trench in U shape having a set width, depth and bottom can be found.

In the present invention, the conditions for irradiation with a laser for creating a trench in U shape, including the laser power as found in advance, the area to be irradiated with a laser, and the scanning speed are set. At this time, such conditions for irradiation that there is no ablation in the interface region of the trench in U shape (that is to say, the inner wall surface) are at least selected (there may be ablation in a region other than where there is the interface of the trench in U shape, as long as the interface portion is not affected).

In addition, the substrate is scanned with a laser under these conditions for irradiation with a laser, and thus, the thermal stress distribution is such that there is great change in the interface portion, and a crack in U shape in a cross section is created in this portion, and thus expands, and as a result, a trench in U shape is created. The distribution in the temperature within the substrate at this time is highly symmetrical, for example in a half-circle, and as a result, the surface of the trench in U shape has few defects of microscopic cracks.

In particular, the conditions for irradiation with a laser including the laser power as found in advance, the area to be irradiated with a laser, and the scanning speed, can be selected when a laser is used as the heating means, and thus, a trench in U shape can be created by peeling off a portion from the material, due to the distribution in the thermal stress, instead of ablation, and in addition, the trench can be created under such conditions that the symmetry in the temperature distribution is high, and therefore, defects, such as microscopic cracks, can be prevented on the processed surface. In addition, no region remains unprocessed in the vicinity of the end surface from which processing starts.

In the above described invention, the conditions for the laser power may be set as in the following Formula (1) in accordance with the material of the substrate which is the object to be processed, the area to be irradiated with a laser, and the scanning speed.

$$P = K \cdot (S \times V) \dots (1)$$

Here, P is the laser power (W) for irradiating the substrate, S is the area irradiated with a laser (mm$^2$), V is the scanning speed (mm/sec) and K is the coefficient (W $\times$ sec/mm$^3$) set for each object to be processed.

As described above, the coefficient K is found through experiment for each material of the substrate in advance, and K is a coefficient which depends on the thermal properties of the material (thermal conductance, index of thermal expansion, strength and the like) and the method for cooling and using remaining heat (thermal properties and flow rate of coolant).

In addition, the area irradiated with a laser relates to the width of the trench in U shape to be created, and the scanning speed relates to the depth of the trench in U shape, and therefore, the area irradiated with a laser S and the scanning speed V can be provided together with the coefficient K in accordance with the width and depth of the trench in U shape to be created, and thus, the laser power (W) required to create a desired trench in U shape can be set using Formula (1).

Furthermore, the method for chamfering a brittle material substrate using the method for creating a trench in U shape according to the first invention is provided with the step of creating a trench in U shape on the surface of the substrate using the first invention, the step of setting a line along which the substrate is cut at the bottom of the created trench in U shape and scribing the line along which the substrate is to be cut between the starting end and the finishing end using a conventional cutter wheel, or the step of laser scribing the line, and a chamfered surface is created by part of the surface of the trench in U shape created between an end surface of the substrate, which is divided along a crack along the line along which the substrate is to be cut, and the surface of the substrate.

Thus, a trench in U shape is created on the surface of a substrate. Then, an imaginary line along which the substrate is to be cut is set at the bottom within the created trench in U shape. Subsequently, conventional laser scribing is carried out on the substrate along this line along which the substrate is to be cut. A chamfered surface is created by part of the surface of the trench in U shape created between the divided end surface and the surface of the substrate.

Furthermore, the method for chamfering a brittle material substrate according to another invention is provided with the step of creating trenches in U shape on the two sides, front and rear, of a substrate using the first invention so that the trenches in U shape face each other with the substrate in between, the step of setting a line along which the substrate is to be cut at the bottom of the trench in U shape created on either side, and at the same time, carrying out conventional laser scribing on the substrate along this line along which the substrate is to be cut. On the two sides of the substrate, a chamfered surface is created by part of the trench in U shape created between the cut end surface and the front surface of the substrate and between the above described end surface and the rear surface of the substrate.

Thus, trenches in U shape are created on the front surface and the rear surface of a substrate so that the trench in U shape face each other with the substrate in between. Then, a line along which the substrate is to be cut is set at the bottom of the trench in U shape on either side, and at the same time, conventional laser scribing is carried out on the substrate along this line along which the substrate is to be cut. On the upper and lower sides of the substrate, a chamfered surface is created by part of the surface of the trench in U shape created between the cut end surface and the front surface of the substrate and between the cut end surface and the rear surface of the substrate, respectively.

The above described method for chamfering a brittle material substrate according to the invention may further be provided with the step of breaking the substrate along the line along which the substrate is to be cut when it is not cut in the step of scribing the substrate.

Here, the method for breaking the substrate is not particularly limited, and a breaking bar is made to make contact with the substrate along the line along which the substrate is to be cut, and the breaking bar can be pressed so that the substrate can be bent and cut, for example.

Furthermore, the method for chamfering a brittle material substrate according to another invention is provided with the step of creating a crack which extends along the line along which the substrate is to be cut between the starting end and the finishing end and does not reach the rear surface by setting a line along which the substrate is to be cut on the surface of a brittle material substrate and scanning and irradiating the substrate with a laser beam along the line along which the substrate is to be cut between the starting end and the finishing end so that the above described substrate is heated to a temperature lower than the softening point, which is then followed by cooling, the step of creating a trench in U shape which is shallower than the depth at which the above described crack reaches along the above described line along which the substrate is to be cut using the method for creating a trench in U shape in a brittle material substrate according to the first invention, and the step of breaking the substrate along the line along which the substrate is to be cut, and the chamfered surface may be created by part of the surface of the trench in U shape created between the cut end surface and the surface of the substrate.

According to the present invention, first, a crack is created along a line along which the substrate is to be cut between the starting end and the finishing end. At this time, the depth of the crack is such that the end of the crack does not reach the rear surface. Then, a trench in U shape is created so that the line along which the substrate is to be cut and a crack is created is located within the trench using the first invention. At this time, the end of the crack is deeper than the trench in U shape. Subsequently, the substrate is broken along the line along which the substrate is to be cut, and the end of the crack runs. As a result, a chamfered surface is created by part of the surface of the trench in U shape created between the divided end surface and the surface of the substrate.

BRIEF DESCRIPTION OF THE DRAWINGS

Fig 1 is a diagram showing configurations and the arrangement of a laser, a material to be processed and a laser power distribution changing apparatus for creating a trench in U shape in a glass substrate;

Figs 2(a) to 2(d) are schematic diagrams showing the relationship between the energy distribution of a laser and the form of the created trench;

Fig 3 is a conceptual diagram showing the laser power region, which is selective, in terms of the relationship between the laser power density and the scanning speed;

Fig 4 is a cross sectional diagram showing the state of a glass substrate when irradiated with a laser;

Fig 5a is a plan diagram showing a trench in U shape;

Fig 5b is a diagram showing an enlargement of an edge of a trench;

Fig 5c is a diagram showing an enlargement of an edge of a trench;

Fig 5d is a diagram showing an enlargement of the bottom of a trench in U shape;

Fig 5e is a diagram showing the outer appearance of peeled glass;

Fig 5f is a diagram showing the outer appearance of peeled glass that is in a free state;

Fig 5g is a cross sectional diagram showing an enlargement of peeled glass;

Fig 5h is a diagram showing the front surface of peeled glass;

Fig 5i is a diagram showing the rear surface of peeled glass;

Figs 6(a) to 6(d) are diagrams showing the steps of a chamfering process according to one embodiment;

Figs 7(a) to 7(e) are diagrams showing the steps of a chamfering process according to another embodiment;

Figs 8(a) to 8(d) are diagrams showing the steps of a chamfering process according to still another embodiment;

Figs 9(a) to 9(c) are diagrams showing the steps of a chamfering process according to yet another embodiment;

Figs 10(a) and 10(b) are diagrams showing another example to which the method for creating a trench is applied;

Figs 11(a) and 11(b) are diagrams showing another example to which the method for creating a trench is applied;

Figs 12(a) and 12(b) are diagrams showing another example to which the method for creating a trench is applied;

Figs 13(a) and 13(b) are diagrams showing another example to which the method for creating a trench is applied;

Figs 14(a) and 14(b) are diagrams showing another example to which the method for creating a trench is applied;

Fig 15 is a diagram showing the state of a substrate irradiated with a laser when being chamfered through laser scribing;

Fig 16 is a diagram showing a glass substrate on which a chamfering process is carried out through laser scribing using a $CO_2$ laser; and

Figs 17(a) and 17(b) are diagrams showing the state of a substrate on which a chamfering process is carried out in accordance with a laser scribing method.

EXPLANATION OF SYMBOLS

| | |
|---|---|
| 1: | laser oscillator |
| 2: | stage |
| 3: | optical system |
| 10: | glass substrate (material to be processed) |
| 11: | surface of substrate |
| 12(12a to 12d), 22, 32: | trenches |
| 13, 23, 33: | initial crack |
| 14, 24, 34: | scribe line |
| 17: | cut surface |
| 18, 28, 38: | chamfered surfaces |

BEST MODE FOR CARRYING OUT THE INVENTION

In the following, the embodiments of the present invention are described in reference to the drawings. In the embodiments below, processing on a glass substrate is described, but processing is the same for other brittle material substrates.

(Creation of Trench in U Shape)

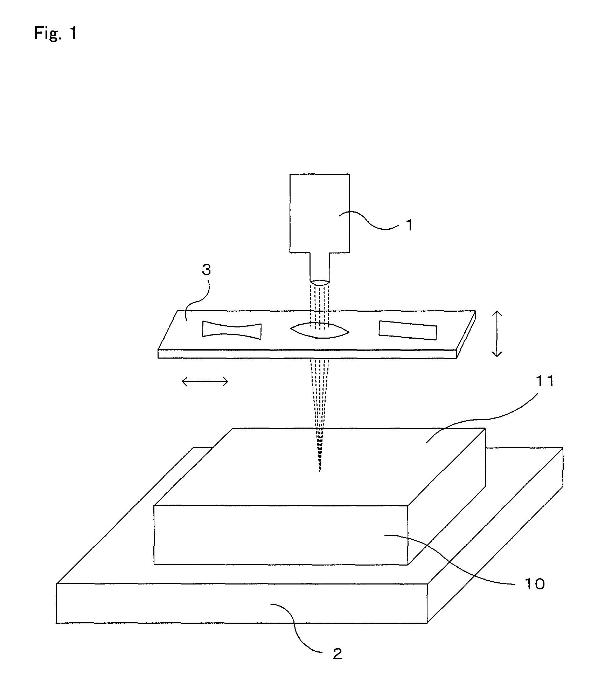

First, a method for creating a trench in U shape in a glass substrate is described. Fig 1 is a diagram showing the configurations and arrangement of a laser, a material to be processed and a laser power distribution changing apparatus for creating a trench in U shape in a glass substrate. A laser beam source 1 is provided so as to face the surface 11 of a glass substrate 10. A stage 2 on which the glass substrate 10 is mounted can move relative to the laser beam source 1, and the speed of movement of this stage 2 controls the scanning speed of the laser beam. In addition, an optical system 3 for adjusting the energy distribution of the laser beam and the irradiated area is provided between the laser beam source 1 and the substrate 10. Concretely, a number of lens grooves having different forms are attached so as to be replaceable, and the energy distribution is changed and the irradiated area is adjusted by shifting the focal point and changing the form of the beam when the lenses are changed or the position (height) of a lens along the optical path of the laser beam is adjusted.

Here, means for adjusting the energy distribution and the irradiated area may be other than the above. For example, the irradiated region may be repeatedly scanned with a laser beam using a polygonal mirror, and the conditions for scanning (scanning speed, the width of the scanning) may be adjusted at this time, and thus, the energy distribution and the irradiated area may be controlled.

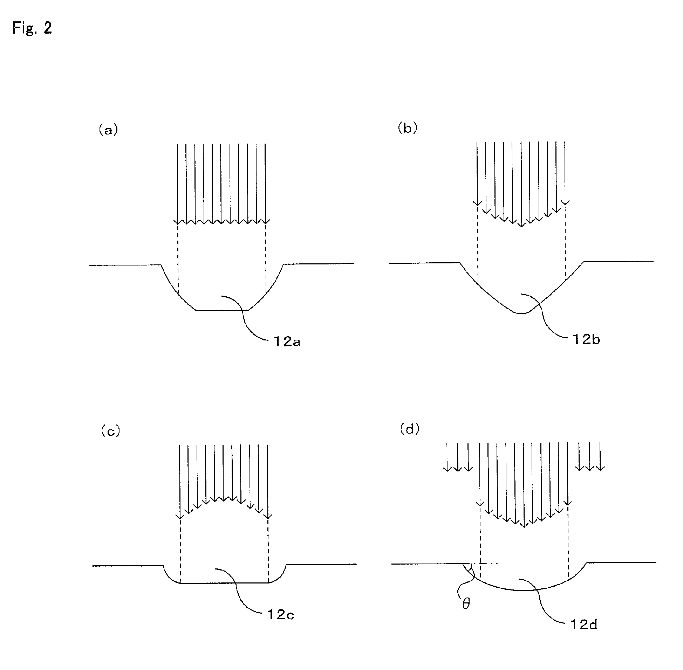

In the cross section, the form of the trench in U shape to be created can be changed by changing the distribution of energy through adjustment of the optical system 3. Figs 2(a) to 2(d) are schematic diagrams showing the relationship between the energy distribution of the laser beam and the form of the trench to be created. As shown in Fig 2(a), the form of the beam is made to closely resemble one where the energy density in a cross section is uniform. In addition, as shown in Fig 2(b), the form of the beam is made to closely resemble one where the energy density in the center portion is greater than the two ends in a cross section. In addition, as shown in Fig 2(c), the energy density of the laser beam in the center portion is greater than in the two ends in the case where the trench is slightly deeper at the two ends than at the center portion, and furthermore, as shown in Fig 2(d), the energy is high in the center portion of the distribution and low in the two ends in order for the angle $\theta$ between the surface of the glass substrate and the inclined surface of the trench to be small, and in some cases, remaining heat may be used. Thus, the form of the energy distribution in a cross section may be changed in accordance with the desired form of the trench.

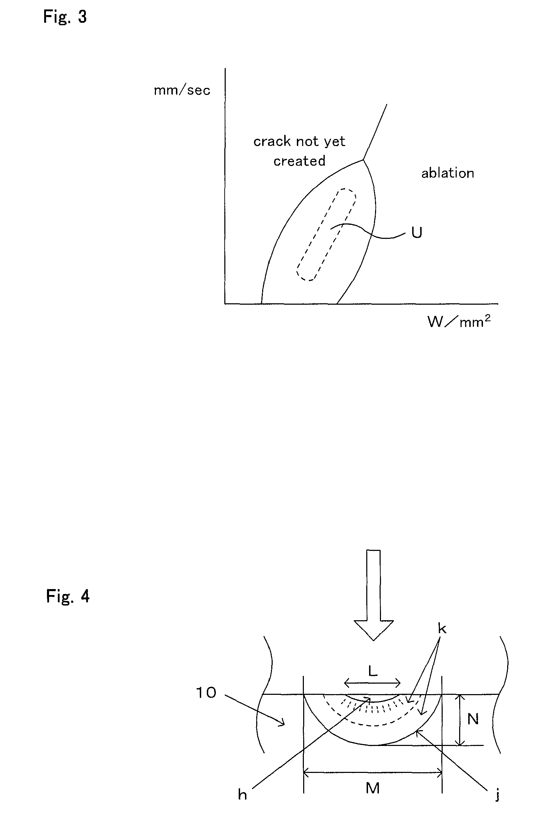

An appropriate laser power is set in relation to the scanning speed. Fig 3 is a conceptual diagram showing the region of the laser power that can be selected in relation to the density of the laser power (laser output per unit area ($W/mm^2$)) and the scanning speed (mm/sec). In the case where the density of the laser power is too high, ablation occurs in a wide range. Meanwhile, in the case where the density of the laser power is too low, the substrate cannot be heated sufficiently and the surface cannot be peeled using thermal stress. In addition, in the case where the scanning speed is high, the calorie for heating is too low, and in the case where the scanning speed is too low, the calorie for heating is too high, and thus, the gradation in the temperature between the heated portion and the non-heated portion becomes smaller and the surface does not peel.

Fig 4 is a schematic cross sectional diagram showing the state of a glass substrate when irradiated with a laser. In accordance with the method for creating a trench in U shape according to the present invention, the width of the laser for irradiation is greater than the width M of the trench in U shape. That is to say, the region h, which is irradiated with a laser so as to be directly heated, is at a distance from the region K, where a trench in U shape is created as a result of peeling through thermal stress when heated through heat conduction from the region which is directly heated, and thus, the glass substrate is processed so that the outer interface of the region K, where a trench in U shape is created when peeled, is not greatly affected even when ablation occurs when the laser power with which the region h is directly irradiated and heated is high, a portion is melted or microscopic cracks appear. Here, j is a surface to be peeled.

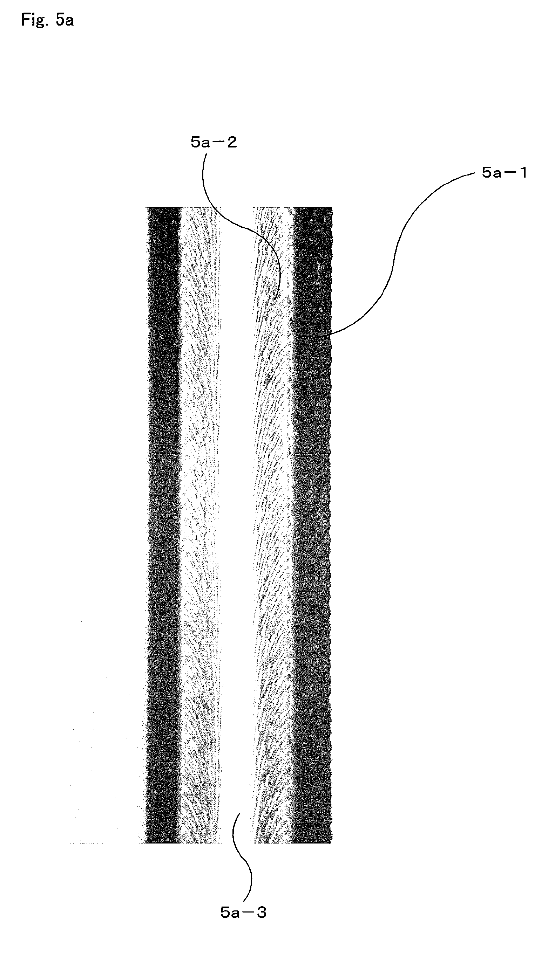

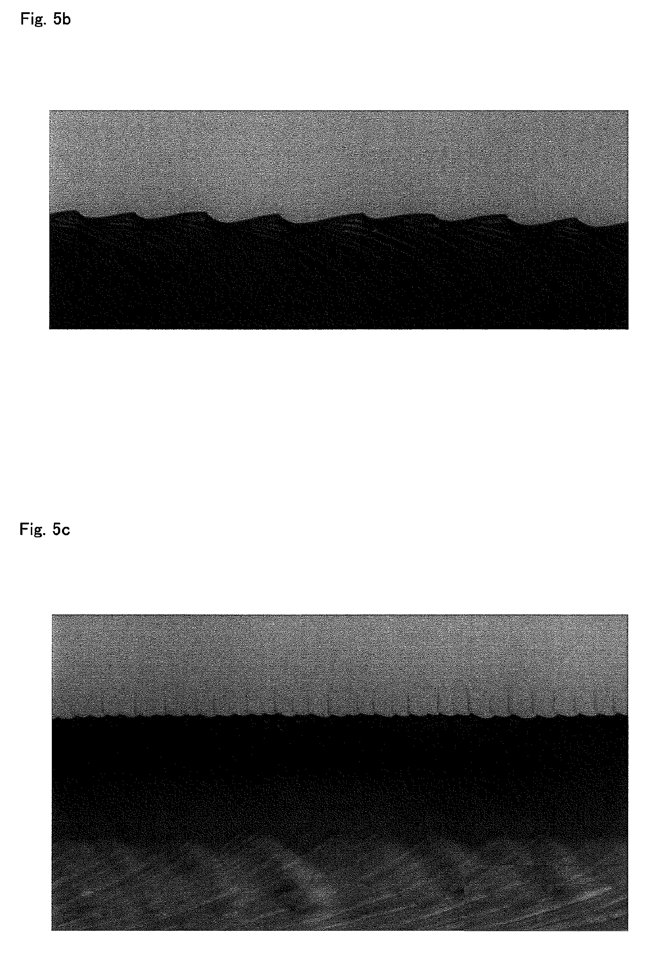

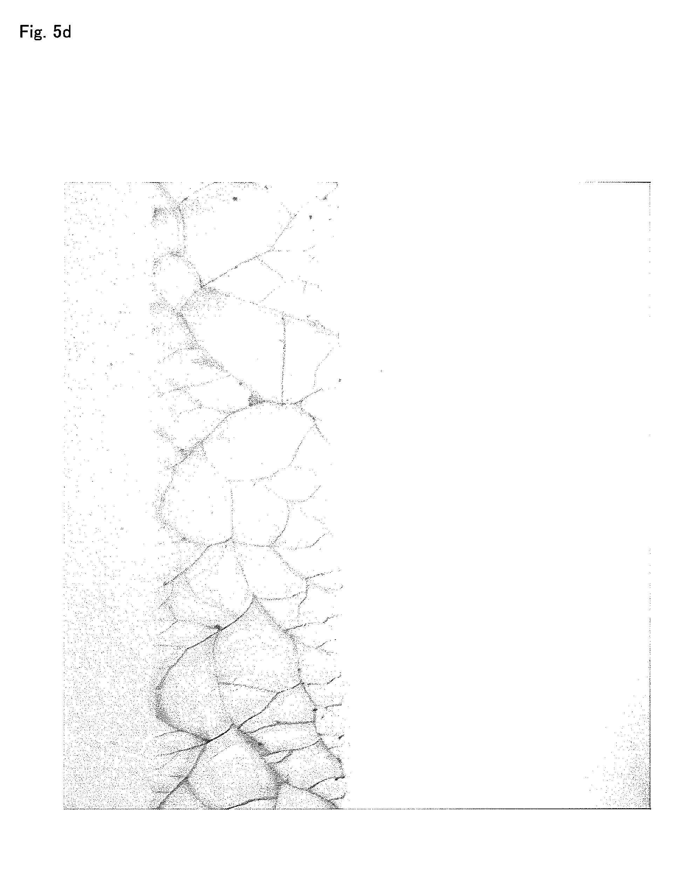

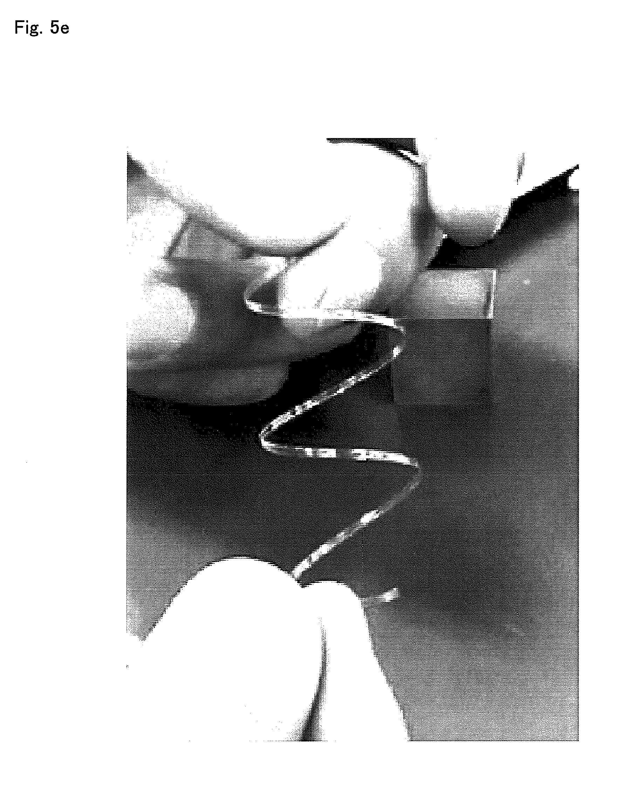

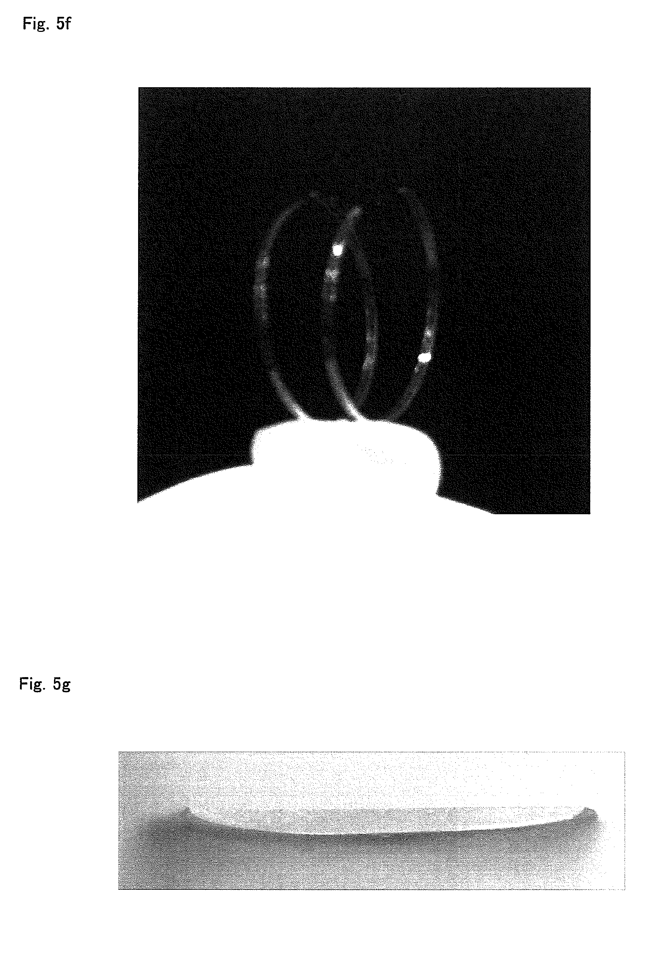

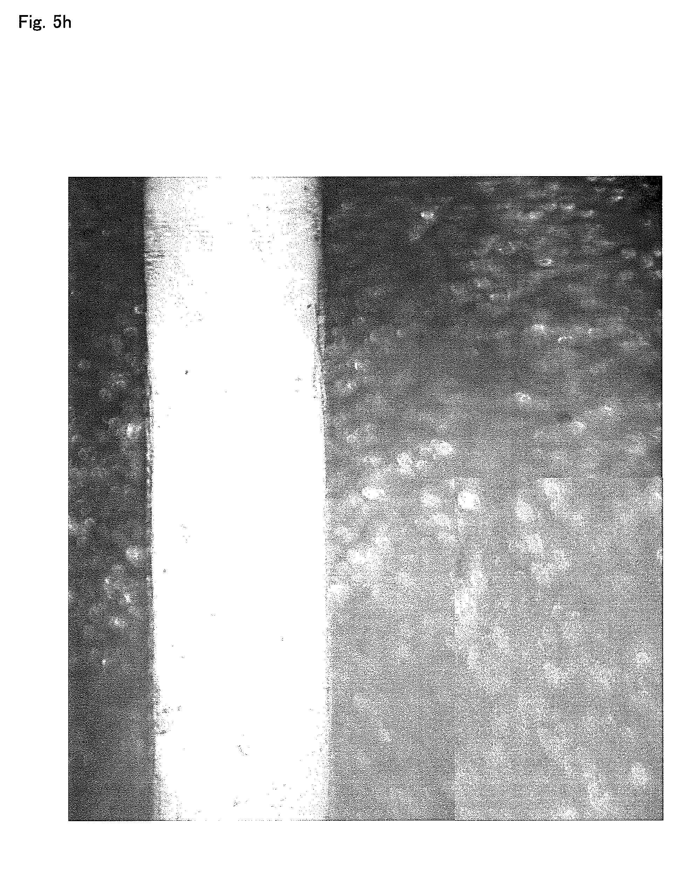

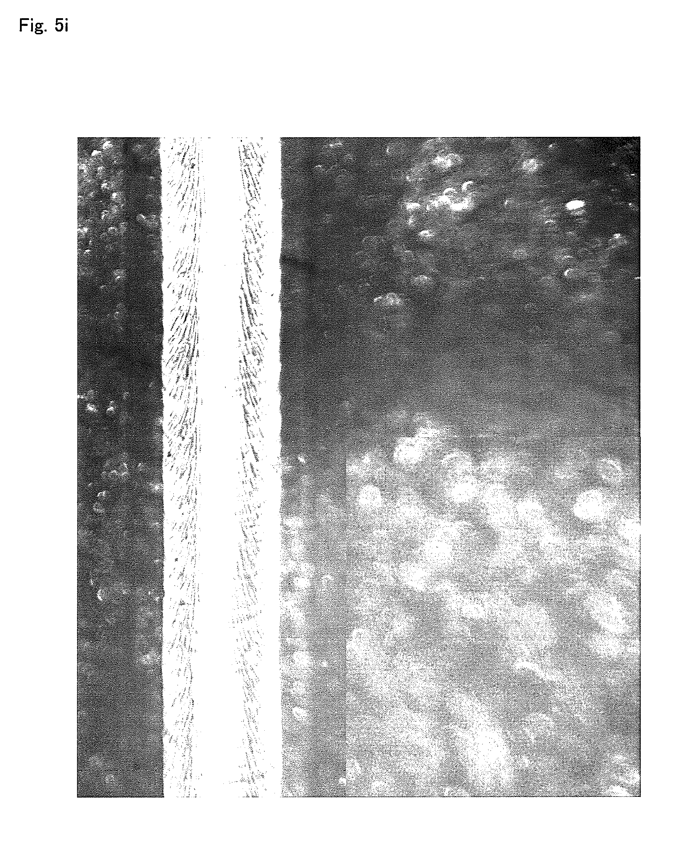

Figs 5(a) to 5(i) are photographs showing trenches in U shape created under the conditions where $CO_2$ laser output is 230 W, the scanning speed is 430 mm/sec, the form of the elliptical beam is 16.0 mm $\times$ 2.0 mm, the size of the object to be processed is 0.7 mm and the material is soda glass. Fig 5a corresponds to a so-called plan diagram where the object to be processed is viewed from the top, and 5a-1 in the figure is a border line between the surface of the substrate and the trench, and though in reality it is a line without a width, the photograph shows a constant width because of the function of the camera. 5a-2 is the surface of the trench, which is a sliding surface. 5a-3 is the bottom of the trench. Fig 5b is a photograph showing an enlargement of an edge of a trench, and there are no cracks in the edge of this trench. Likewise, Fig 5c is a photograph showing an enlargement of an edge of a trench; however, unlike in the case of Fig 5b, the conditions for processing are not suitable and microscopic cracks appear at an edge of the trench. Fig 5d is a photograph showing an enlargement of the bottom of the trench in U shape where the conditions for processing are not suitable and thermal stress is applied in a complex manner to the bottom, and thus, there are random cracks. Fig 5e is a photograph showing the outer appearance of glass peeled from the surface of a glass substrate (waste material), and it becomes possible to peel one continuous piece of glass in helical form (waste material), as shown in the photograph, by appropriately selecting the conditions for irradiation with a laser. Fig 5f is a photograph showing the outer appearance of the peeled glass (waste material) in a free state. Fig 5g is a photograph showing an enlargement of the peeled glass (waste material) in a cross section. Fig 5h is a photograph showing the front surface of the peeled glass (waste material), and the rear surface has a similar form as the front surface (rear surface) with a trench in U shape (recess and protrusion are opposite). Fig 5i is a photograph showing the rear surface of the peeled glass (waste material).

Here, it is not necessary for the beam to be elliptical.

The laser power P (W), the area irradiated with a laser (S) and the scanning speed (V) can be changed so that the coefficient K representing an appropriate laser power per unit area and per unit hour can be empirically calculated, and thus, the laser power is set from formula (1) in the case where a desired area is irradiated and heated with a desired scanning speed, and thus, a trench in U shape can be replicated.

$$P = K \cdot (S \times V) \dots (1)$$

Here, P is the laser power (W) for irradiation, S is the area irradiated with a laser ($mm^2$), V is the scanning speed (mm/sec), and K is a coefficient set for each object to be processed ($W \times sec/mm^3$).

(Chamfering Process)

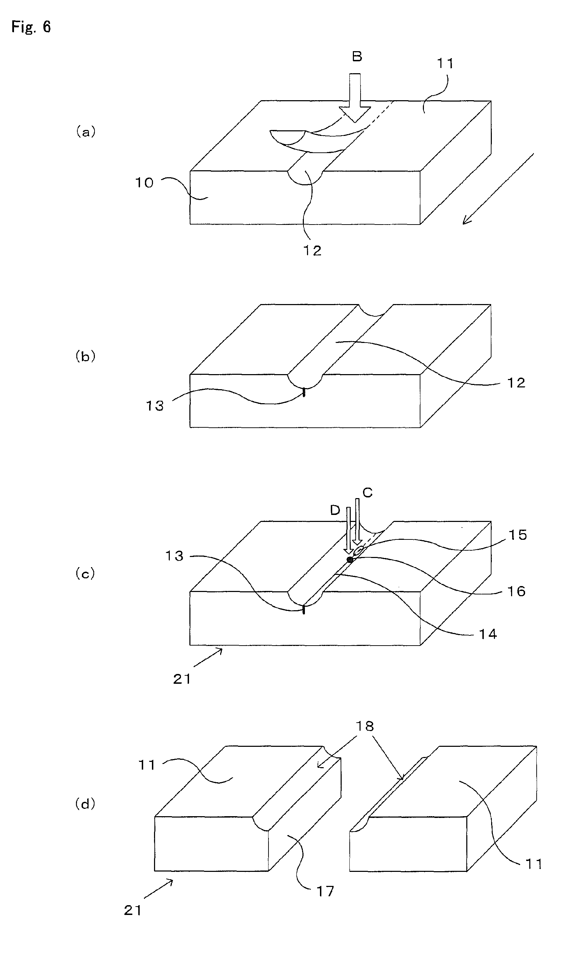

Next, the process for chamfering a glass substrate is described. Figs 6(a) to 6(d) are diagrams showing the chamfering steps according to one embodiment. In the present embodiment, chamfering is carried out on one side of the substrate.
A trench in U shape 12 is created on the surface 11 of the glass substrate 10 using the above described method for creating a trench in U shape (Fig 6(a)). That is to say, the substrate is scanned with a laser beam B under conditions for irradiation with a laser found in advance, so that the trench in U shape 12 is created.
Next, a visual line along which the substrate is to be divided is set inside the trench in U shape 12 (for example in a location along the center line in the trench in U shape 12), and an initial crack (notch) 13 is created in a location where the set line along which the substrate is to be divided crosses one end of the trench in U shape 12 (Fig 6(b)). The initial crack (notch) 13 may be created by pressing a cutter wheel against the substrate, or through irradiation with a laser. Here, it is not necessary to provide an initial crack (notch) 13.
Next, a scribing process is carried out using a cutter wheel or a laser with the initial crack (notch) 13 as a starting point, so that a scribe line 14 is drawn along the line along which the substrate is to be cut (Fig 6(c)).
In laser scribing, the substrate is scanned with a laser beam C for scribing with the shape of the beam spot 15 adjusted to an elliptical form or flat oval form along the line along which the substrate is to be divided, immediately followed by a cooling spot 16, where a coolant B is jetted against the substrate. As a result, a crack is created and expands, so that a scribe line 14 is created.
When the scribe line 14 is deep and reaches the rear surface 21, the substrate is divided as it is, whereas when the scribe line 14 is shallow, a break bar, is put in contact with the rear surface 21 along the rear side of the scribe line 14, and the substrate 10 is bent along the scribe line 14 and broken.
As a result, the trench in U shape 12 is divided in two, and thus chamfered surfaces 18 are created between the divided surfaces 17 and the surface 11 of the substrate.
Here, in the case where the substrate is thin and can be divided with only the trench in U shape, without a scribe line, scribing may be omitted.

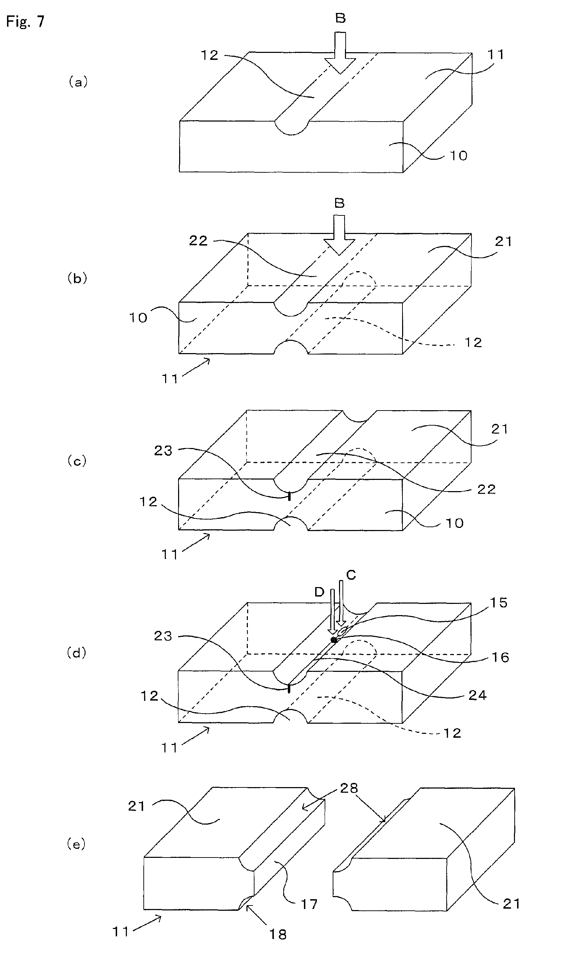

Figs 7(a) to 7(e) are diagrams showing the chamfering process according to another embodiment. In the previous embodiment, the chamfering process is carried out on one side, while in the present embodiment, the chamfering process is carried out on the two sides: front and rear.
A trench in U shape 12 is created on the surface 11 of a glass substrate 10 in accordance with the above described method for creating a trench in U shape (Fig 7(a)). That is to say, the substrate is scanned with a laser beam B under conditions for irradiation with a laser found in advance, and thus, a trench in U shape 12 is created.
Next, the substrate 10 is turned over and a trench in U shape 22 is created on the rear surface 21 (Fig 7(b)). That is to say, a trench in U shape 22 is created on the rear side in the same place as the trench 12 in U shape on the rear side in accordance with the above described method for creating a trench in U shape. Thus, trenches in U shape 12 and 22 are created on the two sides, facing each other with the center portion of the substrate 10 in between.
Next, a visual line along which the substrate is to be divided is set inside the trench in U shape 22 (for example in the location of the center line of the trench in U shape 22), and an initial crack (notch) 23 is created in a location where the set line along which the substrate is to be divided crosses one end of the trench in U shape 22 (Fig 7(c)). Here, the initial crack (notch) may be provided on the trench in U shape 12 side instead of on the trench in U shape 22 side.
Next, a scribe line 24 is created along the line along which the substrate is to be divided through processing for laser scribing with the initial crack (notch) 23 as a starting point (Fig 7(d)). That is to say, the substrate is scanned with a laser beam C for scribing where the form of the beam spot 15 is adjusted to an elliptical form or a flat oval form along the line along which the substrate is to be divided, immediately followed by a cooling spot 16, where a coolant D is jetted against the substrate. As a result, a crack is created and expands, and a scribe line 24 is created.
When the scribe line 24 is deep and reaches the rear surface 21, the substrate is divided as it is, whereas when the scribe line 24 is shallow, a break bar, is put in contact with the inside of the trench in U shape 12 on the front surface 11 side along the scribe line 24, and the substrate 10 is bent along the scribe line 24 and broken (Fig 7(e)).
As a result, the trench in U shape 12 is divided in two, and thus, chamfered surfaces 18 are created between the divided surfaces 17 and the front surface 11 of the substrate. In addition, the trench in U shape 22 is divided in two, and thus, chamfered surfaces 28 are created between the divided surfaces 17 and the rear surface 21 of the substrate.

In the case where the substrate is thin and can be divided with only a trench in U shape, without a scribe line, scribing may be omitted.

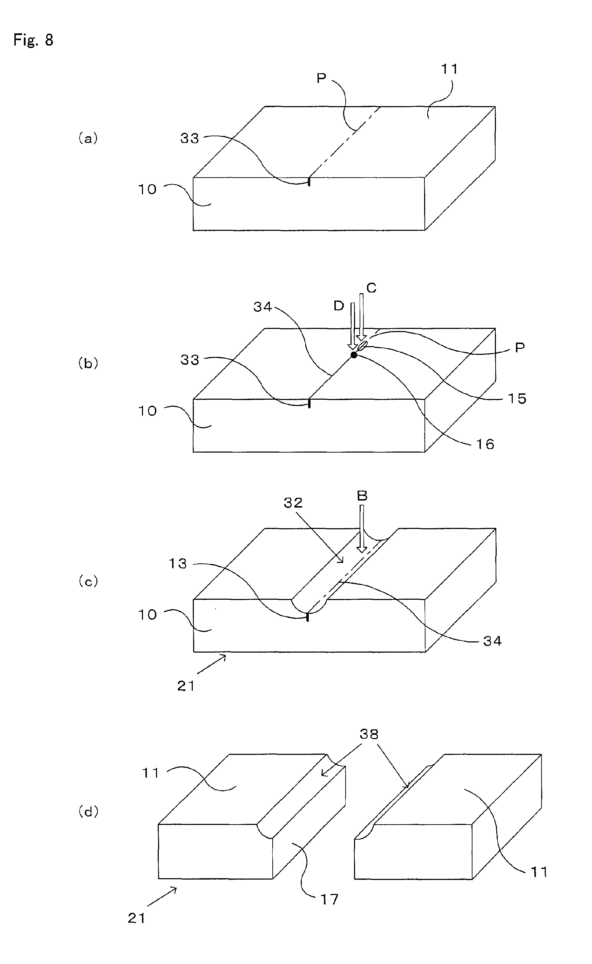

Figs 8(a) to 8(d) are diagrams illustrating the chamfering process according to still another embodiment. Whereas in the two embodiments described so far, a laser scribing process is carried out after a trench in U shape is first created, in the present embodiment, a trench in U shape is created after a laser scribing process or blade scribing is first carried out.

A visual line along which the substrate is to be divided P is set on the surface 11 of a glass substrate 10, and an initial crack (notch) 33 is created in a location where the set line along which the substrate is to be divided P crosses one end of the substrate (Fig 8(a)).

Next, a scribe line 34 is created along the line along which the substrate is to be divided P through processing for laser scribing with the initial crack (notch) 33 as a starting point (Fig 8(b)). That is to say, the substrate is scanned with a laser beam C for scribing where the form of the beam spot 15 is adjusted to an elliptical form or a flat oval form along the line along which the substrate is to be divided, immediately followed by a cooling spot 16, where a coolant D is jetted against the substrate. As a result, a crack is created and expands, and a scribe line 34 is created.

Next, a trench in U shape 32 is created in accordance with the above described method for creating a trench in U shape (Fig 8(c)). That is to say, the substrate is scanned with a laser beam B under conditions for irradiation with a laser found in advance, and thus, a trench in U shape 32 is created.

At this time, the depth of the trench in U shape 32 is adjusted so that the end of the scribe line 34 remains in the substrate 10.

Next, a break bar, not shown, is put in contact with the substrate on the rear surface 21 in the same place as the scribe line 34, and the substrate 10 is bent along the scribe line 34, and thus broken (Fig 8(d)).

As a result, the trench in U shape 32 is divided in two, and chamfered surfaces 38 are created between the divided surfaces 17 and the surface 11 of the substrate.

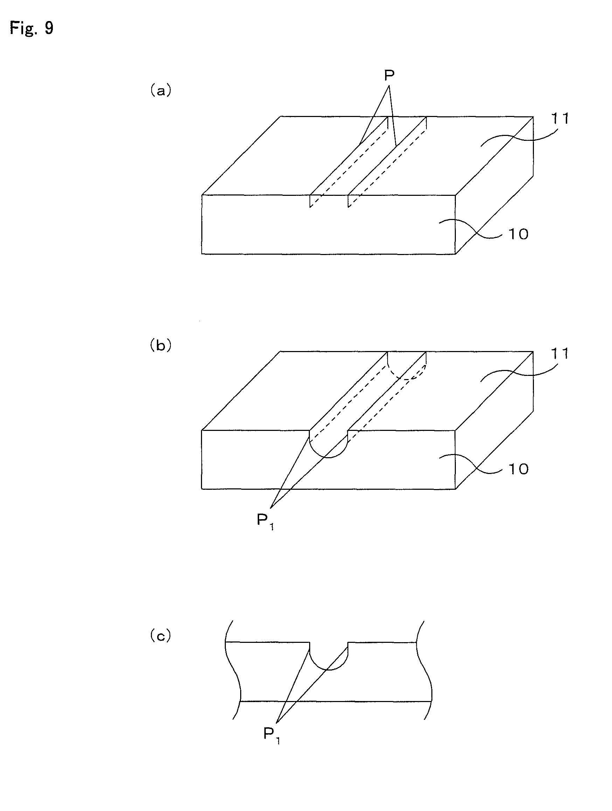

Figs 9(a) to 9(c) are diagrams illustrating the chamfering process according to yet another embodiment. First, two virtual lines along which the substrate is to be divided P are set on the surface of a glass substrate 10, and laser scribing is carried out along the set lines along which the substrate is to be divided P (Fig 9(a)). Thus, a trench in U shape is created, as shown in Figs 9(b) and 9(c). That is to say, the process is **characterized in that** the created trench in U shape has flat upper portions (P1) where the width is approximately constant. Here, the chamfering process is the same as with the above described techniques, and therefore, the descriptions thereof are not repeated.

Thus, there are no microscopic cracks in the trench in U shape, which is highly symmetrical, according to the present invention, and therefore, the chamfered surfaces are stable when the chamfered surfaces are created using the trench in U shape, and in addition, no region remains unchamfered.

Though chamfering processes for a glass substrate are described in the above, a trench in U shape can be created in other brittle material substrates, by selecting appropriate conditions for irradiation with a laser in accordance with the substrate material. In addition, chamfered surfaces are created using the trench in U shape, and therefore, the chamfered surfaces are stable.

Next, other applications where a technique for creating a trench is developed for creating trenches in U shape are described.

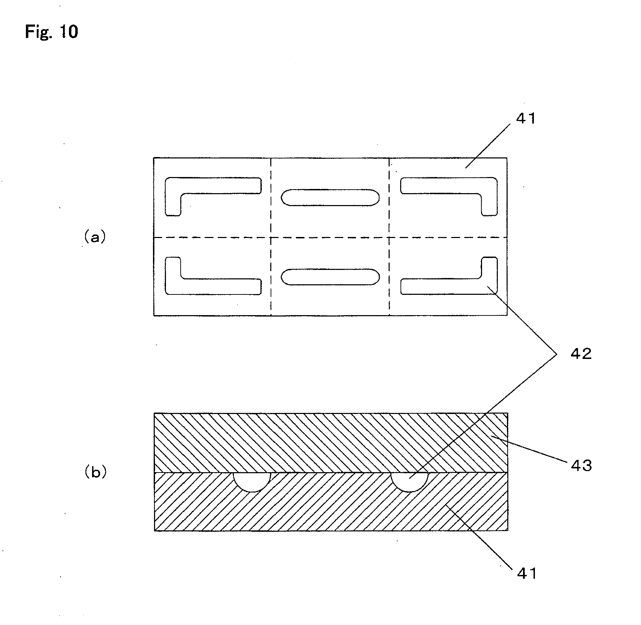

First, the low coefficient of linear expansion is focused on for the processing table in precision machines when a brittle material substrate is used. Fig 10(a) shows how discontinuous oil reservoirs 42 are created in the lower die 41 that forms a processing table, and Fig 10(b) is a schematic cross sectional diagram showing the combination of an upper die 41 and a lower die 43.

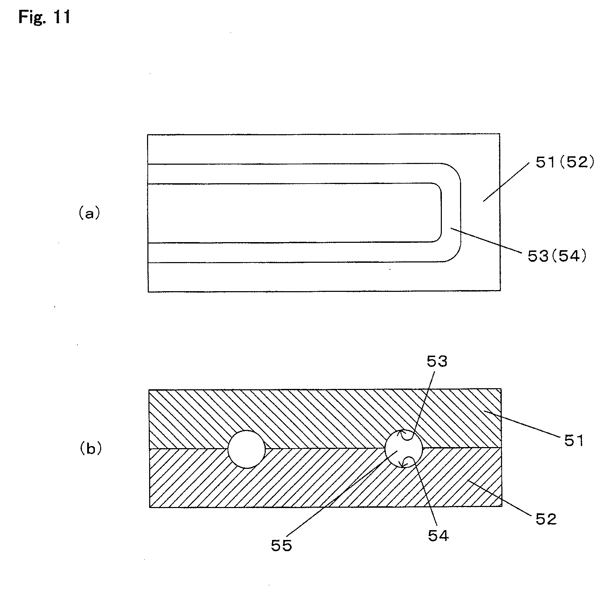

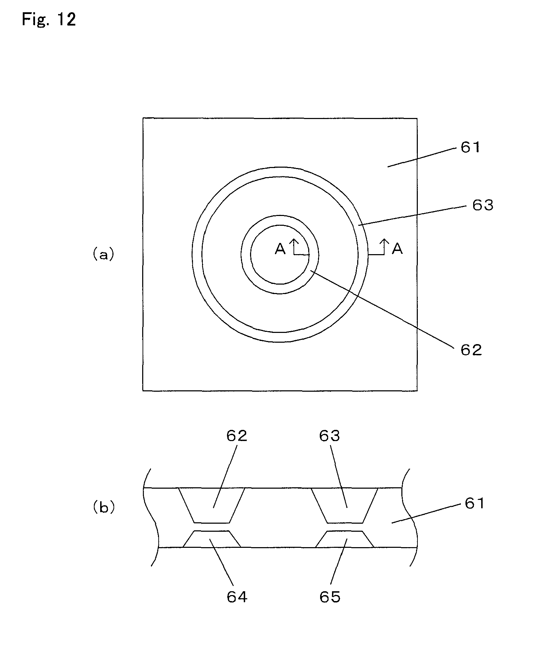

A similar processing table can be used for precision machines to form a continuous trench in U shape 53 (54) on the surface of an upper die 51 and a lower die 52 (Fig 11(a)), and the upper die 51 and the lower die 52 overlap, so that one processing table is formed. Thus, a coolant path 55 is created in the processing table (Fig 11(b)). Furthermore, this technique for creating a trench can be adopted for the manufacture of magnetic discs and optical discs, to create trenches 62 and 63 (64 and 64) in a flat plate 61, and after that carry out a hollowing process. Thus, the disc is easy to manufacture (Figs 12(a) and 12(b)).

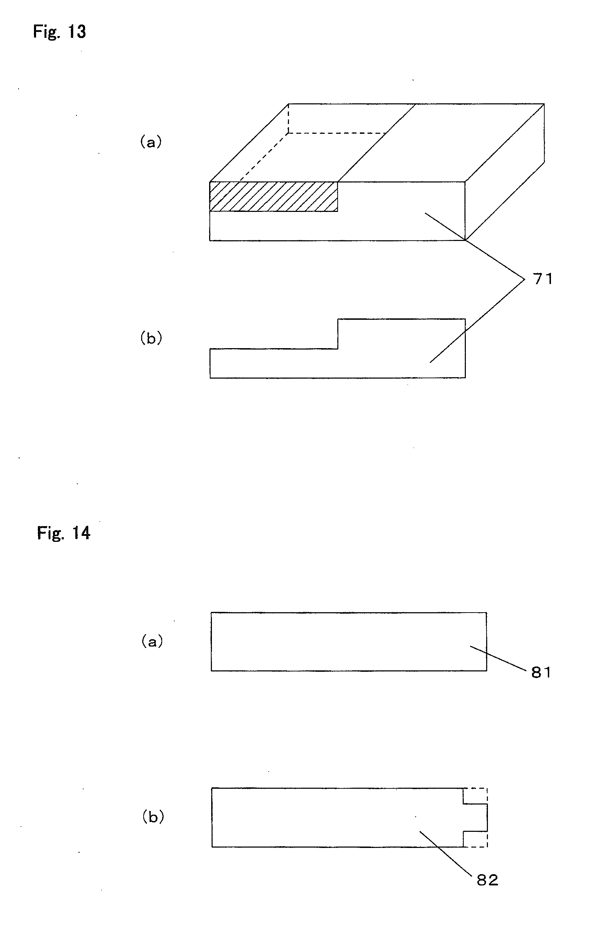

In addition, a process for creating a linear trench can be repeated in parallel shifting to the side little by little on a flat substrate which is the object to be processed, and thus the surface of the material can be carved away while keeping the surface flat. When at least part is carved away from a brittle material in plate form having a predetermined thickness, so that a part 71 having a predetermined shape can be manufactured, for example, this technique for creating a trench can be adopted, and thus, desired parts are easy to manufacture (Figs 13(a) and 13(b)).

In addition, when an object to be processed 81 in a body of rotation, such as a column, a sphere, a spheroid or a cone, is carved on the outer peripheral surface (side or end surface) by rotating it around its rotational axis (for example the column axis), this technique for creating a trench can be adopted, so that a desired form can be given to the body of revolution 82 (Figs 14(a) and 14(b)).

Industrial Applicability

The present invention can be used to create trenches in brittle material substrates, including those in cylindrical form.

**Claims**

1. A method for creating a trench in U shape in a brittle material substrate, **characterized in that** a trench in U shape is created when a portion of a brittle material substrate is peeled from the surface by rapidly heating the portion on the surface of said substrate under heating conditions that make peeling possible.

2. The method for creating a trench in U shape in a brittle material substrate according to Claim 1, **characterized in that** the rapid heating means is a laser, and a trench in U shape is created by scanning a surface of a brittle material substrate with a laser beam with conditions for irradiation with a laser for creating a trench in U shape which include the laser power as found in advance, the area to be irradiated with a laser and the scanning speed corresponding to the substrate material of the object to be processed, and the width, depth and form of the trench in U shape to be created, where the substrate is scanned with a laser beam under said conditions for irradiation with a laser, so that the material in the heated portion peels from the substrate material in the vicinity of the border between the heated portion and the unheated portion, due to thermal expansion, and thus, a trench having an interface in U shape is created by removing the heated portion.

3. The method for creating a trench in U shape in a brittle material substrate according to Claim 2, wherein the laser power conditions are as in the following Formula (1) in accordance with the substrate material of the object to be processed, the area to be irradiated with a laser, and the scanning speed:

$$P = K \cdot (S \times V) \dots (1)$$

where P is the laser power (W) for irradiation, S is the area irradiated with a laser (mm$^2$), V is the scanning speed (mm/sec) and K is the coefficient of the object to be processed (W $\times$ sec/mm$^3$).

4. A method for creating a trench in U shape on a flat surface of an object to be processed by removing part of the substrate or repeatedly creating parallel trenches in U shape on a flat surface of an object to be processed using the method for creating a trench in U shape in a brittle material substrate according to any of Claims 1, 2 or 3.

5. A method for removing at least part of an object to be processed from a surface on the outer periphery while rotating the object to be processed around a rotational axis using the method for creating a trench in U shape in a brittle material substrate according to any of Claims 1, 2 or 3.

6. A method for hollowing a material by separating the material in a trench in U shape after creating a trench in U shape for a rectangular or curved closed circuit on a plate which is an object to be processed using the method for creating a trench in U shape in a brittle material substrate according to any of Claims 1, 2 or 3.

7. A method for chamfering a brittle material substrate, **characterized in that** a trench in U shape is created on a surface of a substrate using the method for creating a trench in U shape in a brittle material substrate according to any of Claims 1, 2 or 3, a chamfered surface is made of a trench surface which is part of a trench in U shape created between an end surface and a surface of the substrate, which are separated along a line along which the substrate is to be divided, between a start end and a finish end of said line along which the substrate is to be divided at the bottom of said created trench in U shape in accordance with a method for scribing a substrate by expanding a crack with a laser, a scribing method using a cutter wheel, or a method for breaking the substrate along a trench without scribing.

8. A method for chamfering a brittle material substrate, **characterized in that** trenches in U shape are created on the two surfaces; front and rear, of a substrate so as to face each other with said substrate in between using the method for creating a trench in U shape in a brittle material substrate according to any of Claims 1, 2 or 3, a chamfered surface is made of an end surface which is separated along a line along which the substrate is to be divided, and a trench surface which is part of a trench in U shape created between said end surface and a surface of the substrate between a start end and a finish end of said line along which the substrate is to be divided at the bottom of one of the created trenches in U shape in accordance with a scribing method using a laser, a scribing method using a cutter wheel, or a method for breaking the substrate along a trench without scribing.

9. A method for chamfering a brittle material substrate, **characterized in that** a surface of a brittle material substrate is scribed along a line along which the substrate is to be divided, a trench in U shape which is shallower than the crack created in said scribing step is created along said line along which the substrate is to be divided using the method for creating a trench in U shape in a brittle material substrate according to any of Claims 1, 2 or 3, and the substrate is broken along the line along which the substrate is to be divided a chamfered surface is made of a trench surface which is part of a trench in U shape created between an end surface and a surface of the substrate, which are separated.

10. A method for creating a trench in U shape on a surface of a substrate, wherein two approximately parallel scribe lines are created on a surface of a brittle material substrate so as to sandwich lines along which the substrate is to be divided, and then the method for creating a trench in U shape in a brittle material substrate according to any of Claims 1, 2 or 3 is used between said lines along which the substrate is to be divided.

11. The method for creating a trench in U shape according to any of Claims 1 to 10, **characterized in that** the trench in U shape is continuous or broken lines or curved lines in a plane.

Fig. 1

Fig. 2

(a)

12a

(b)

12b

(c)

12c

(d)

θ

12d

Fig. 3

Fig. 4

Fig. 5a

5a－2

5a－1

5a－3

Fig. 5b

Fig. 5c

Fig. 5d

Fig. 5e

Fig. 5f

Fig. 5g

Fig. 5h

Fig. 5i

Fig. 6

(a)

(b)

(c)

(d)

Fig. 7

(a)

(b)

(c)

(d)

(e)

Fig. 8

(a)

(b)

(c)

(d)

Fig. 9

(a)

(b)

(c)

Fig. 10

(a)

41

42

(b)

43

41

**Fig. 11**

(a)

51(52)

53(54)

(b)

53

51

55

54

52

Fig. 12

(a)

61

63

A↑    ↑A

62

(b)

62    63

61

64    65

Fig. 13

(a)

71

(b)

Fig. 14

(a)

81

(b)

82

Fig. 15

Fig. 16

Fig. 17

(a)

(b)

<div align="center">

**INTERNATIONAL SEARCH REPORT**

</div>

| | International application No. |
|---|---|
| | PCT/JP2008/064855 |

| A. CLASSIFICATION OF SUBJECT MATTER |
|---|
| *B23K26/00*(2006.01)i, *B23K26/38*(2006.01)i, *B28D5/00*(2006.01)i |

According to International Patent Classification (IPC) or to both national classification and IPC

| B. FIELDS SEARCHED |
|---|
| Minimum documentation searched (classification system followed by classification symbols) |
| B23K26/00, B23K26/38, B28D5/00 |

| Documentation searched other than minimum documentation to the extent that such documents are included in the fields searched |
|---|
| Jitsuyo Shinan Koho          1922-1996   Jitsuyo Shinan Toroku Koho    1996-2008 |
| Kokai Jitsuyo Shinan Koho    1971-2008   Toroku Jitsuyo Shinan Koho    1994-2008 |

| Electronic data base consulted during the international search (name of data base and, where practicable, search terms used) |
|---|
| |

C. DOCUMENTS CONSIDERED TO BE RELEVANT

| Category* | Citation of document, with indication, where appropriate, of the relevant passages | Relevant to claim No. |
|---|---|---|
| X<br>Y | JP 2003-088989 A  (Japan Science and Technology Corp.),<br>25 March, 2003 (25.03.03),<br>Par. Nos. [0005] to [0014]; Figs. 1 to 6<br>(Family: none) | 1-6<br>7-11 |
| Y | JP 2007-245173 A  (Hamamatsu Photonics Kabushiki Kaisha),<br>27 September, 2007 (27.09.07),<br>Par. Nos. [0022] to [0045]; Figs. 1 to 11<br>& WO 2007/105537 A1 | 7-11 |

| ☐   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 November, 2008 (07.11.08) | 18 November, 2008 (18.11.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H21990241684 B

- JP H91997225665 B